Europäisches Patentamt

European Patent Office

Office européen des brevets

(19)

(11) Publication number: **0 070 580**
**B1**

## EUROPEAN PATENT SPECIFICATION

(12)

(45) Date of publication of patent specification: **25.07.84**

(51) Int. Cl.³: **C 09 K 5/04, F 24 J 3/02**

(21) Application number: **82200612.8**

(22) Date of filing: **18.05.82**

(54) Solar collector and heat pipe, notably suitable for use therein.

(30) Priority: **29.05.81 NL 8102619**

(43) Date of publication of application:
**26.01.83 Bulletin 83/4**

(45) Publication of the grant of the patent:
**25.07.84 Bulletin 84/30**

(84) Designated Contracting States:
**DE FR GB IT NL**

(56) References cited:
**DE - A - 2 649 726**
**GB - A - 1 359 378**
**GB - A - 2 053 453**
**US - A - 4 080 957**

(73) Proprietor: **N.V. Philips' Gloeilampenfabrieken**
**Groenewoudseweg 1**
**NL-5621 BA Eindhoven (NL)**

(72) Inventor: **Bloem, Herman**
**c/o Int.Octrooibureau B.V. Prof.Holstlaan 6**
**NL-5656 AA Eindhoven (NL)**

(74) Representative: **Melio, Jan Dirk et al,**
**INTERNATIONAAL OCTROOIBUREAU B.V. Prof.**
**Holstlaan 6**
**NL-5656 AA Eindhoven (NL)**

Courier Press, Leamington Spa, England.

## Description

The invention relates to a solar collector which comprises an absorber for the collection of solar radiation which is thermally conductively connected to an evaporator section of a heat transport system which is constructed as a heat pipe and which can exchange heat with a further heat transport system by way of a condenser section, the heat pipe containing a working medium having a critical temperature such that the permissible maximum temperature in the further heat transport system is not exceeded.

A solar collector of the kind set forth is known from United States Patent Specification 3,390,672.

In this type of solar collector, the condensed working medium collects in the evaporated section of the heat pipe. When heat is applied from the absorber, the working medium starts to evaporate. The vapour flows to the condenser section in which is gives off heat to a medium in the further heat transport system. The condensate subsequently returns to the evaporator section.

The transport of heat from the evaporator to the condenser continues for as long as a phase transition of the working medium can take place. For example, if the temperature of the heat pipe rises above the critical temperature of the working medium, the heat transfer capacity almost ceases to exist. Thus the maximum temperature at which the heat transfer ceases can be determined by a selection of the working medium. This is very important because the further heat transport system whereto the heat is applied usually may not exceed a given temperature.

From said United States Patent Specification 3,390,672 working media are known for a number of temperature ranges, for example, ethyl alcohol, diethyl ether, Freon 11, Freon 113. Working media for heat pipe applications are also known from other publications, for example, a number of other Freons and ammonia. It is to be noted that Freon is a registered trade mark. It is a drawback of all the known working media that they decompose after some time at the temperature liable to occur in solar collectors, producing residual gases which no longer participate in the evaporation/condensation process and which collect in the highest portion of the condenser. Thus, part of the condenser becomes inactive and, after a prolonged period of time, possibly even the entire condenser is inactivated and hence also the heat pipe.

It is an object of the invention to provide a solar collector of the kind set forth in which the working medium used in the heat pipe is a medium which does not decompose in the course of time and which has a heat transfer capacity which varies rather steeply with the temperature, so that at the normal working temperature there is high heat transfer capacity which subsequently decreases very rapidly to zero at the critical temperature. Further heat transport then takes place only by thermal conduction and convection.

A solution to this problem has already been described in Netherlands Patent Application 79 05 057 laid open to public inspection in which isobutane is proposed as the working medium.

It is a drawback of isobutane; however, that is has a comparatively low critical temperature.

Notably for systems in which a higher temperature is permissible in the further network of ducts or for systems having a rather high thermal resistance between the condenser and the further network of ducts, a working medium having a somewhat higher critical temperature would be preferred.

The invention is based on the recognition of the fact that the saturated hydrocarbons having a straight carbon chain of not more than three carbon atoms are thermally stable even at elevated temperatures and have a heat transfer capacity which varies steeply with the temperature. An example in this respect is propane which is known to be used as a working medium for heat pipes but which has a critical temperature of 97°C which is too low for many applications.

The solar collector in accordance with the invention is characterized in that the working medium is neopentane (2,2-dimethylpropane).

Neopentane offers the major advantage that is a very stable compound at elevated temperatures which does not decompose.

Furthermore, neopentane has a critical temperature of approximately 161°C which is an acceptable maximum temperature for many applications.

The heat transfer capacity of neopentane varies rather steeply with the temperature. This means that even though the heat transfer capacity is zero at the critical temperature, it already has a significant value at the desired operating temperature. A high heat transfer capacity in operating conditions is important, because the surface area of the condenser may be smaller as the heat transfer capacity is higher.

The invention furthermore relates to a heat pipe which is notably suitable for use in a solar collector and which is characterized in that it contains neopentane as the working medium.

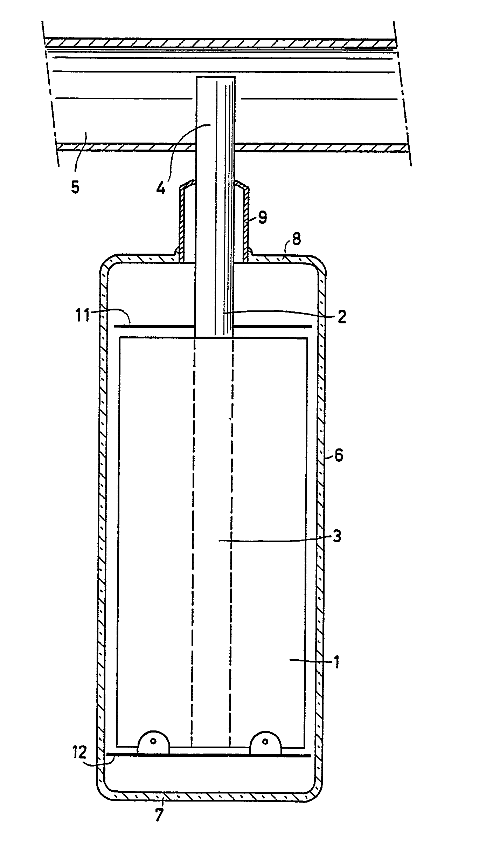

The invention will be described in detail hereinafter with reference to the drawing which diagrammatically shows a solar collector by way of example.

The solar collector shown comprises a plate-shaped absorber 1 which is thermally conductively connected to the evaporator section 3 of a tubular heat pipe 2. The upper side of the absorber 1 is provided with a layer which absorbs the solar heat.

The heat pipe 2 furthermore comprises a condenser section 4 which exchanges heat with a liquid in a further heat transport system 5 which is only partly shown. The absorber plate 1 and the evaporator section 3 of the heat pipe are accommodated in a glass envelope 6 having a round cross-section. The envelope 6 is sealed at the lower side 7. The envelope is closed at the upper side by a portion 8 which is also made of glass and which is fused to a thin-walled bush 9 of a suitable material, for example, chromium-iron, which is soldered or welded to the heat pipe 2 in a vacuum-tight manner.

Thanks to this construction, thermal stresses between the heat pipe and the glass envelope are avoided to a high degree. A pressure deficiency prevails inside the glass envelope.

Supporting plates 11 and 12 are provided at the ends of the plate-shaped absorber 1. The plate 12 at the same time serves for centring the heat pipe.

The thermal losses remain small due to the accommodation of the absorber 1 and the evaporator section 3 in a vacuum envelope. A further improvement in this respect can be obtained by providing the inner side of the glass envelope completely or partly with a selective heat-reflective layer, for example, zinc-doped indium oxide.

The working medium in the heat pipe 2 is neopentane which evaporates under the influence of the heat given off to the evaporator section 3 by the absorber plate 1. The vapour flows to the condenser and condenses while giving off its evaporation heat to the liquid in the system 5 *via* the condenser wall.

Should the temperature of the collector rise for some reason, for example, because the system 5 extracts too little heat, the temperatures are liable to rise to very high values in given circumstances, even beyond 300°C, and it has been found that neopentane does not decompose at such a value. The heat transfer capacity of the evaporation/condensation cycle then quickly decreases until it becomes zero at approximately 161°C which is the critical temperature of neopentane. Further heat is transported to the system 5 only under the influence of conduction and convection, so that the temperature of the system will not become too high.

Neopentane and also isobutane and propane have the advantage that they are thermally stable compounds in comparison with all other known working media in systems which operate with comparatively low maximum permissible temperatures, which means that no gaseous components which would disturb the operation of the heat pipe are formed.

In addition to the high thermal stability, these substances also have a high heat transfer capacity at the normal operating temperatures, which means that the surface area of the condenser section 4 may be comparatively small.

## Claims

1. A solar collector which comprises a plate-shaped absorber for the collection of solar radiation which is thermally conductively connected to an evaporator section of a heat transport system which is constructed as a heat pipe and which can be made to exchange heat with a further heat transport system by way of a condenser section, the heat pipe containing a working medium having a critical temperature such that the permissible maximum temperature in the further heat transport system is not exceeded, characterized in that the working medium is neopentane (2,2-dimethyl-propane).

2. A heat pipe, notably suitable for use in the solar collector claimed in Claim 1, characterized in that it contains neopentane as the working medium

## Patentansprüche

1. Sonnenkollektor mit einem plattenfömigen Absorber zum Auffangen von Sonnenstrahlung, der mit einem Verdampferteil eines als Wärmerohr ausgebildeten Wärmetransportsystems wärmeleitend verbunden ist, welches System mittels eines Kondensatorteils mit einem weiteren Wärmetransportsystem in Wärmeaustauch gebracht werden kann, wobei sich in dem Wärmerohr ein Arbeitsmedium mit einer derart kritischen Temperatur befindet, dass die zulässige maximale Temperatur in dem weiteren Wärmetransportsystem nicht überschritten wird, dadurch gekennzeichnet, dass das Arbeitsmedium Neopentan (2,2-Dimethylpropan) is.

2. Wärmerohr, insobesondere geeignet zum Gebrauch in dem Sonnenkollektor nach Anspruch 1, dadurch gekennzeichnet, dass darin als Arbeitsmedium Neopentan vorhanden ist.

## Revendications

1. Collecteur solaire comportant un absorbeur pour la collection de rayonnement solaire, qui est relié d'une façon thermiquement conductrice, à une partie d'évaporateur d'un système de transport de chaleur, qui est réalisé comme caloduc et qui peut échanger de la chaleur avec un autre système de transport de chaleur à l'aide d'une partie de condenseur, le caloduc contenant un fluide actif présentant une température critique de façon que la température admissible au maximum dans l'autre système de transport de chaleur ne soit pas dépassé, caractérisé en ce que le fluide actif est le néopentane (2,2-diméthyl-propane).

2. Caloduc, convenant notamment a un collectuer solaire selon la revendication 1, caractérisé en ce qu'il contient du néopentane comme fluide actif.